Europäisches Patentamt

European Patent Office

Office européen des brevets

(19)

(11) EP 0 826 550 B1

(12) FASCICULE DE BREVET EUROPEEN

(45) Date de publication et mention
de la délivrance du brevet:
**23.07.2003 Bulletin 2003/30**

(51) Int Cl.⁷: **B60L 9/30**

(21) Numéro de dépôt: **97401917.6**

(22) Date de dépôt: **11.08.1997**

(54) **Dispositif et procédé d'alimentation sous tension continue d'une chaîne de traction au moyen de convertisseurs à partir de différentes tensions alternatives ou continues**

Vorrichtung und Verfahren für ein Betriebssystem mit Gleichspannungsversorgung mittels eines Umsetzers ausgehend von verschiedenen Gleich- oder Wechselspannungen

DC power supply device and process for a traction system by means of a converter for different AC or DC voltages

(84) Etats contractants désignés:
**AT BE CH DE DK ES GB IE IT LI LU NL PT SE**

(30) Priorité: **03.09.1996 FR 9610713**

(43) Date de publication de la demande:
**04.03.1998 Bulletin 1998/10**

(73) Titulaire: **GEC ALSTHOM TRANSPORT SA**
**75116 Paris (FR)**

(72) Inventeur: **Escallier, Didier**
**65600 Semeac (FR)**

(74) Mandataire: **Gosse, Michel et al**
**ALSTOM**
**Intellectual Property Department**
**25,avenue Kléber**
**75116 Paris (FR)**

(56) Documents cités:
**EP-A- 0 698 519**          **DE-A- 19 524 985**
**FR-A- 2 713 565**

## Description

La présente invention concerne les chaînes de traction, notamment dans le domaine ferroviaire, en général, et porte, plus particulièrement, sur un dispositif et un procédé d'alimentation sous tension continue d'une chaîne de traction au moyen de convertisseurs à partir de différentes tensions alternatives ou continues.

Le brevet FR 2 713 565 de la demanderesse porte sur un "SYSTEME D'ALIMENTATION MULTICOURANT A HAUTE DISPONIBILITE POUR ENGIN DE LOCOMOTIVE FERROVIAIRE".

Ce brevet montre que les chaînes de traction, par exemple munies de moteurs de type asynchrone, nécessite une alimentation en tension continue.

Ce brevet rappelle également que les véhicules ferroviaires sont de plus en plus destinés à circuler sur des réseaux dont la tension d'alimentation est différente selon les zones.

On trouvera par exemple des tensions de 25 kV, 50 Hz, 15 kV, 16 2/3 Hz, 3 kV DC ou 1,5 kV DC.

Les dispositifs d'alimentation sous tension continue d'une chaîne de traction au moyen de convertisseurs à partir de différentes tensions alternatives ou continues de l'art antérieur mettent en oeuvre un convertisseur spécifique à chaque tension d'alimentation.

En d'autres termes, les dispositifs d'alimentation sous tension continue d'une chaîne de traction au moyen de convertisseurs à partir de différentes tensions alternatives ou continues de l'art antérieur utilisent par exemple:

- un pont de Graëtz ou un pont monophasé à commutations forcées pour les alimentations alternatives,
- un dispositif abaisseur, par exemple un hacheur, si la tension DC d'alimentation est supérieure à la tension d'alimentation de la chaîne de traction,
- un dispositif élévateur si la tension DC d'alimentation est inférieure à la tension d'alimentation de la chaîne de traction.

Le document EP 0 698 519 divulgue également un dispositif d'alimentation sous tension continue d'une chaîne de traction au moyen d'un convertisseur à partir de différentes tensions alternatives ou continues disponibles sur la ligne d'alimentation de la chaîne de traction. Toutefois, dans ce document un seul convertisseur est divulgué et il n'est pas utilisé lors de l'alimentation à partir de tensions continues.

Aussi un but de l'invention est-il un dispositif et un procédé d'alimentation sous tension continue d'une chaîne de traction au moyen de convertisseurs à partir de différentes tensions alternatives ou continues, permettant la mise en oeuvre des mêmes convertisseurs.

L'invention se rapporte à un dispositif d'alimentation sous tension continue d'une chaîne de traction au moyen de convertisseurs à partir de différentes tensions alternatives ou continues disponibles sur une ligne d'alimentation, les convertisseurs alternatif/continu étant connectés côté alternatif, respectivement, à un premier et à un second enroulements secondaires d'un transformateur d'alimentation comportant un enroulement primaire, les convertisseurs alternatif/continu fournissant, côté continu, la tension d'alimentation continue sur une borne d'alimentation de la chaîne de traction, le dispositif d'alimentation de la chaîne de traction étant alimenté au moyen d'un premier élément d'alimentation et d'un second élément d'alimentation connectés, d'une part, à la ligne d'alimentation, le premier élément d'alimentation étant susceptible d'être connecté, d'autre part, à l'enroulement primaire du transformateur d'alimentation, au moyen d'un premier élément de connexion, et le second élément d'alimentation étant susceptible d'être connecté, d'autre part, à la borne d'alimentation de la chaîne de traction, le dispositif d'alimentation de la chaîne de traction étant caractérisé en ce que les convertisseurs alternatif/continu sont disposés en série de manière à présenter un point milieu et en ce que le second élément d'alimentation est également susceptible d'être connecté, d'autre part, au point milieu des convertisseurs séries, au moyen d'un second élément de connexion.

L'invention concerne également un procédé d'alimentation sous tension continue d'une chaîne de traction au moyen de convertisseurs à partir de différentes tensions alternatives ou continue disponibles sur un ligne d'alimentation, les convertisseurs alternatif/continu étant connectés côté alternatif, respectivement, à un premier et à un second enroulements secondaires d'un transformateur d'alimentation comportant un enroulement primaire, les convertisseurs alternatif/continu fournissant, côté continu, la tension d'alimentation continue sur une borne d'alimentation de la chaîne de traction, le dispositif d'alimentation de la chaîne de traction étant alimenté au moyen d'un premier élément d'alimentation et d'un second élément d'alimentation connectés, d'une part, à la ligne d'alimentation, le procédé comportant une étape consistant à connecter le premier élément d'alimentation, d'autre part, à l'enroulement primaire du transformateur d'alimentation, au moyen d'un premier élément de connexion, lorsque la tension d'alimentation disponible sur la ligne d'alimentation est une tension alternative, ou à connecter le second élément d'alimentation, au moyen d'un second élément de connexion, d'autre part, à la borne d'alimentation de la chaîne de traction, lorsque la tension d'alimentation disponible sur la ligne d'alimentation est une tension continue égale à la tension d'alimentation de la chaîne de traction, le procédé d'alimentation de la chaîne de traction C étant caractérisé en ce que les convertisseurs alternatif/continu sont disposés en série de manière à présenter un point milieu et en ce qu'il comporte une étape consistant à connecter le second élément d'alimentation, au moyen du second élément de connexion, au point milieu des convertisseurs séries, lorsque, la tension d'alimentation disponible sur la ligne d'alimentation est une tension continue de l'ordre de la moitié de la tension d'alimentation de la chaîne de traction C.

Un avantage du dispositif et du procédé d'alimentation sous tension continue d'une chaîne de traction au moyen de convertisseurs à partir de différentes tensions alternatives ou continues de l'invention est la réduction du matériel à installer dans la chaîne de traction du fait que les convertisseurs sont réutilisés en fonction des diverses tensions disponibles.

Il résulte de ce qui précède qu'aucun des convertisseurs reste inutilisés comme c'est le cas dans les dispositifs de l'art antérieur.

Un autre avantage du dispositif et du procédé d'alimentation sous tension continue d'une chaîne de traction au moyen de convertisseurs à partir de différentes tensions alternatives ou continues de l'invention est la diminution du nombre de contacteurs, plus particulièrement dans le cas d'une alimentation de 1500V.

Un autre avantage du dispositif et du procédé d'alimentation sous tension continue d'une chaîne de traction au moyen de convertisseurs à partir de différentes tensions alternatives ou continues de l'invention est la suppression d'inductances.

Un autre avantage du dispositif et du procédé d'alimentation sous tension continue d'une chaîne de traction au moyen de convertisseurs à partir de différentes tensions alternatives ou continues de l'invention est que la sortie pour l'alimentation de la chaîne de traction est toujours située à la même borne.

D'autres buts, caractéristiques et avantages de l'invention apparaîtront à la lecture de la description du mode de réalisation préféré du dispositif et du procédé d'alimentation sous tension continue d'une chaîne de traction au moyen de convertisseurs à partir de différentes tensions alternatives ou continues, description faite en liaison avec les dessins dans lesquels:

- la figure 1 est une représentation schématique du dispositif d'alimentation sous tension continue d'une chaîne de traction au moyen de convertisseurs à partir de différentes tensions alternatives ou continues conforme à l'invention,
- la figure 2 reprend la représentation schématique du dispositif d'alimentation conforme à l'invention de la figure 1 dans le cas où la tension d'alimentation disponible est une tension alternative $U_{AC}$,
- la figure 3 reprend la représentation schématique du dispositif d'alimentation conforme à l'invention de la figure 1 dans le cas où la tension d'alimentation disponible est une tension continue $U_{1DC}$ égale à la tension d'alimentation de la chaîne de traction,
- la figure 4 reprend la représentation schématique du dispositif d'alimentation conforme à l'invention de la figure 1 dans le cas où la tension d'alimentation disponible est une tension continue $U_{2DC}$ de l'ordre de la moitié de la tension d'alimentation de la chaîne de traction,

- les figures 5 à 7 sont des représentations schématiques d'autres modes de réalisation du dispositif d'alimentation sous tension continue d'une chaîne de traction au moyen de convertisseurs à partir de différentes tensions alternatives ou continues conforme à l'invention.

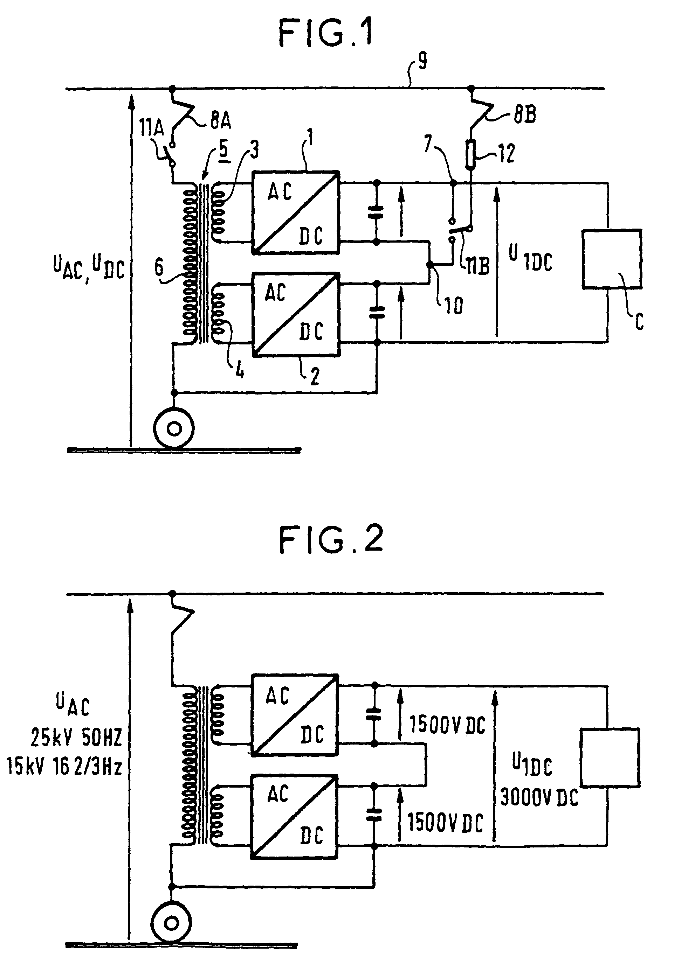

La figure 1 est une représentation schématique du dispositif d'alimentation sous tension continue $U_{1DC}$ d'une chaîne de traction C au moyen de convertisseurs 1, 2 à partir de différentes tensions alternatives ou continues $U_{AC}$, $U_{DC}$ conforme à l'invention.

Les différentes tensions alternatives ou continues $U_{AC}$, $U_{DC}$ sont disponibles sur une ligne d'alimentation 9.

Les convertisseurs alternatif/continu 1, 2 sont disposés en série de manière à présenter un point milieu 10.

Les convertisseurs alternatif/continu 1, 2 sont connectés côté alternatif AC, respectivement, à un premier 3 et à un second 4 enroulements secondaires d'un transformateur d'alimentation 5 comportant un enroulement primaire 6.

Les convertisseurs alternatif/continu 1, 2 fournissent, côté continu DC, la tension d'alimentation continue $U_{1DC}$ sur une borne d'alimentation 7 de la chaîne de traction C.

La chaîne de traction C comporte, de façon connue de l'art antérieur, au moins un moteur de traction (non représenté) et des convertisseurs (non représentés) permettant le réglage du point de fonctionnement des moteurs de traction, la tension d'alimentation $U_{1DC}$ étant une tension continue.

Le dispositif d'alimentation de la chaîne de traction C est alimenté au moyen d'un premier élément d'alimentation 8A et d'un second élément d'alimentation 8B connectés, d'une part, à la ligne d'alimentation 9.

Conformément à une caractéristique essentielle de l'invention, le dispositif d'alimentation de la chaîne de traction C est tel que le premier élément d'alimentation 8A est susceptible d'être connecté, d'autre part, à l'enroulement primaire 6 du transformateur d'alimentation 5, au moyen d'un premier élément de connexion 11A, et le second élément d'alimentation 8B est susceptible d'être connecté, d'autre part, soit à la borne d'alimentation 7 de la chaîne de traction C, soit au point milieu 10 des convertisseurs séries 1, 2, au moyen d'un second élément de connexion 11B.

Les convertisseurs 1, 2 sont par exemple du type pont monophasé à commutations forcées PMCF.

Le transformateur d'alimentation 5 et les convertisseurs 1, 2 sont donc capable de réaliser l'alimentation DC d'une chaîne de traction à partir des tensions d'alimentation suivantes:

- toute tension alternative $U_{AC}$,
- une tension continue $U_{1DC}$ égale à la tension d'alimentation de la chaîne de traction,

- une tension continue $U_{2DC}$ de l'ordre de la moitié de la tension d'alimentation de la chaîne de traction.

Comme il sera décrit plus en détail ci-après, une fonction d'onduleur et une fonction de redresseur est susceptible d'être affectée aux convertisseurs 1, 2 selon que la chaîne de traction travaille en freinage ou en traction.

La répartition de ces fonctions est effectuée au moyen des premier (11A) et second (11B) éléments de connexion.

La figure 2 reprend la représentation schématique du dispositif d'alimentation conforme à l'invention de la figure 1 dans le cas où la tension d'alimentation disponible est une tension alternative $U_{AC}$.

Le dispositif d'alimentation de la chaîne de traction est alimenté au moyen du premier élément d'alimentation 8A connecté, d'une part, à la ligne d'alimentation 9 et d'autre part à l'enroulement primaire 6 du transformateur d'alimentation 5.

Les deux convertisseurs 1, 2 connectés en série alimente la chaîne de traction C sous une tension de $U_{1DC}$.

Chaque convertisseurs 1, 2 n'a à ses bornes de sortie qu'une tension de l'ordre de $U_{1DC}/2$.

La tension d'alimentation disponible $U_{AC}$ est par exemple égale à 25 kV, 50 Hz ou à 15 kV, 16 2/3 Hz.

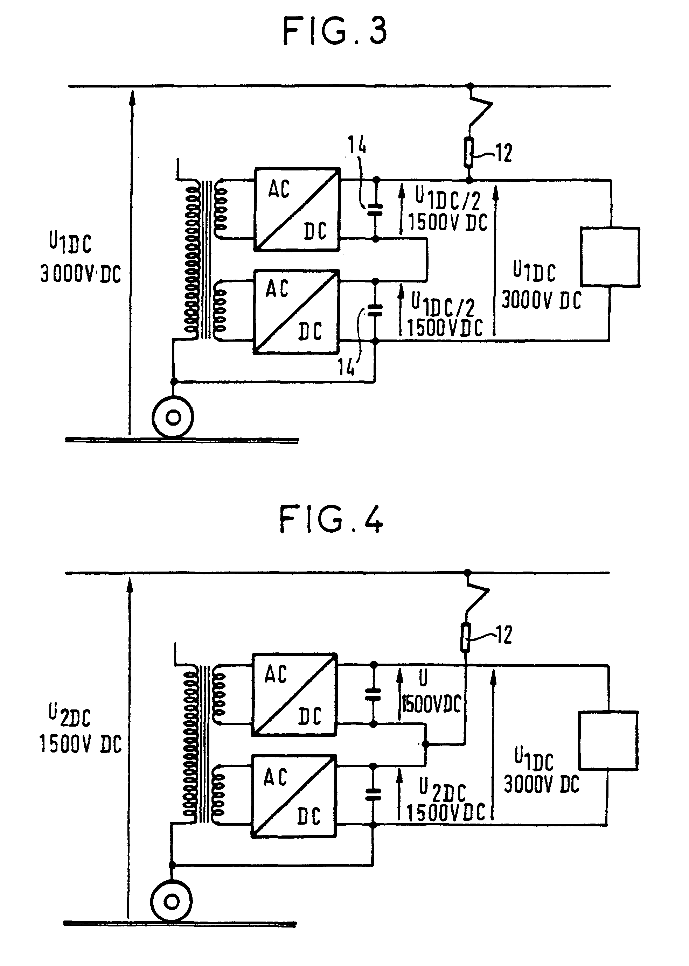

La figure 3 reprend la représentation schématique du dispositif d'alimentation conforme à l'invention de la figure 1 dans le cas où la tension d'alimentation disponible est une tension continue $U_{1DC}$ égale à la tension d'alimentation de la chaîne de traction.

Le dispositif d'alimentation de la chaîne de traction C est alimenté au moyen du second élément d'alimentation 8B connecté, d'une part, à la ligne d'alimentation 9 et d'autre part à la borne d'alimentation de la chaîne de traction 7.

La chaîne de traction C est de préférence alimentée par l'intermédiaire d'un dispositif de filtrage 12, par exemple du type inductance et condensateur.

Dans le cas présent le transformateur d'alimentation 5 et les convertisseurs 1, 2 ne jouent aucun rôle.

Un avantage du dispositif d'alimentation sous tension continue d'une chaîne de traction au moyen de convertisseurs à partir de différentes tensions alternatives ou continues de l'invention est ici que les condensateurs 14 associés aux convertisseurs peuvent être utilisés pour réaliser tout ou partie du dispositif de filtrage 12.

La tension continue $U_{1DC}$ est par exemple égale à 3000V DC.

La figure 4 reprend la représentation schématique du dispositif d'alimentation conforme à l'invention de la figure 1 dans le cas où la tension d'alimentation disponible est une tension continue $U_{2DC}$ de l'ordre de la moitié de la tension d'alimentation de la chaîne de traction.

Le dispositif d'alimentation de la chaîne de traction C est alimenté au moyen du second élément d'alimentation 8B connecté, d'une part, à la ligne d'alimentation 9 et d'autre part au point milieu 10 des convertisseurs 1, 2 séries.

Le dispositif d'alimentation est donc alimenté au niveau du point milieu 10 des convertisseurs 1, 2 séries.

Dans une telle configuration, l'un des convertisseurs 2 fonctionne en onduleur et fourni de la puissance au transformateur 5 d'alimentation par l'intermédiaire de l'enroulement secondaire associé 4 à ce convertisseur 2.

Le second convertisseur 1 fonctionne en redresseur et utilise la puissance fournie par le convertisseur 2 précédent pour maintenir à ses bornes de sortie une tension U telle que:

$$U = U_{1DC} - U_{2DC}$$

Les fonctions d'onduleur et de redresseur sont affectées aux convertisseurs 1, 2 selon que la chaîne de traction travaille en freinage ou en traction.

La tension continue $U_{2DC}$ est par exemple égale à 1500V DC.

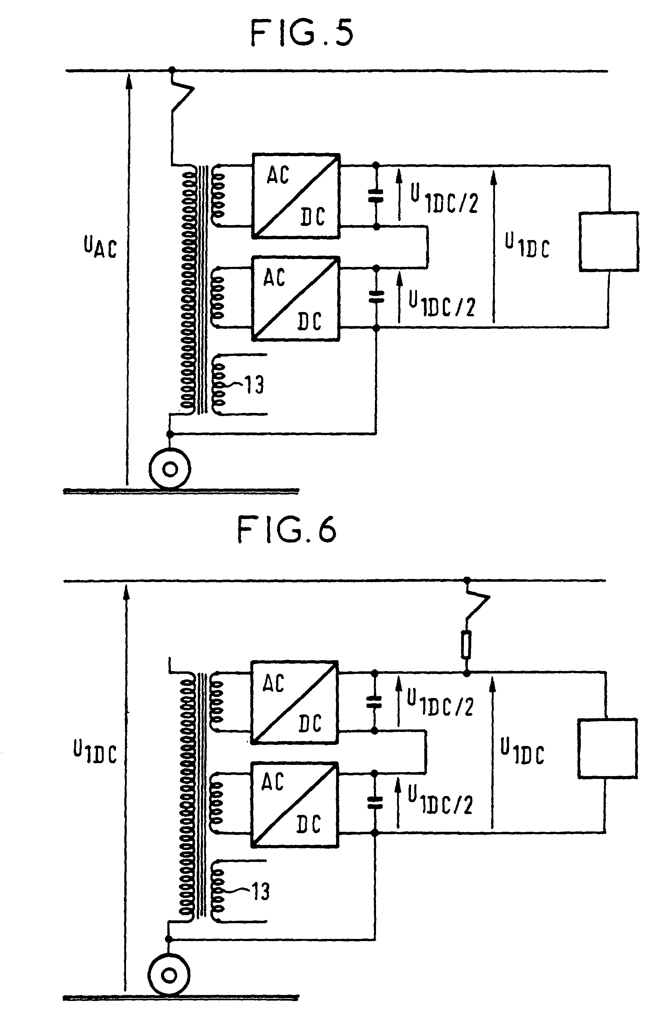

Les figures 5 à 7 sont des représentations schématiques d'autres modes de réalisation du dispositif d'alimentation sous tension continue d'une chaîne de traction au moyen de convertisseurs à partir de différentes tensions alternatives ou continues conforme à l'invention.

Dans de tels modes de réalisation, le transformateur d'alimentation comporte un enroulement supplémentaire 13.

Cet enroulement supplémentaire 13 du transformateur d'alimentation 5 alimente un autre circuit, par exemple les auxiliaires de la chaîne de traction.

La figure 5 est une représentation schématique du dispositif d'alimentation conforme à l'invention dans le cas où la tension d'alimentation disponible est une tension alternative $U_{AC}$.

Ce mode de réalisation correspond au fonctionnement classique d'un transformateur à plusieurs enroulements secondaires.

La figure 6 est une représentation schématique du dispositif d'alimentation conforme à l'invention dans le cas où la tension d'alimentation disponible est une tension continue $U_{1DC}$ égale à la tension d'alimentation de la chaîne de traction.

Conformément à cet autre mode de réalisation, les convertisseurs 1, 2 fonctionnent en onduleur ou en redresseur et fournissent de l'énergie à l'enroulement supplémentaire 13 du transformateur d'alimentation 5 par couplage magnétique.

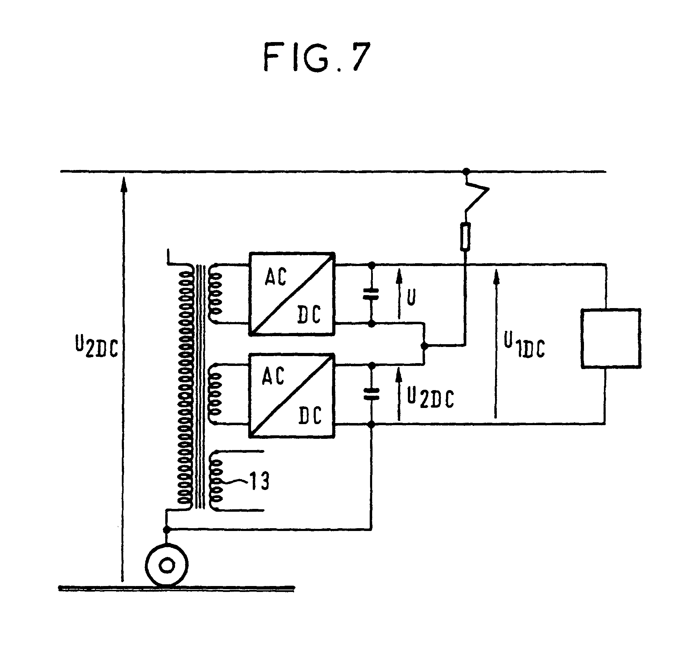

La figure 7 est une représentation schématique du dispositif d'alimentation conforme à l'invention dans le cas où la tension d'alimentation disponible est une tension continue $U_{2DC}$ de l'ordre de la moitié de la tension d'alimentation de la chaîne de traction.

Conformément à cet autre mode de réalisation, un des convertisseurs fonctionne en onduleur, un partie de l'énergie étant susceptible d'être utilisée par l'enroulement supplémentaire 13 du transformateur d'alimentation 5.

Il résulte de ce qui précède un procédé d'alimentation sous tension continue $U_{1DC}$ d'une chaîne de traction C au moyen de convertisseurs 1, 2 à partir de différentes tensions continues ou alternatives $U_{AC}$, $U_{DC}$ disponibles sur une ligne d'alimentation 9.

Les convertisseurs alternatif/continu 1, 2 sont disposés en série de manière à présenter un point milieu 10.

Les convertisseurs alternatif/continu 1, 2 sont connectés côté alternatif AC, respectivement, à un premier 3 et à un second 4 enroulements secondaires d'un transformateur d'alimentation 5 comportant un enroulement primaire 6.

Les convertisseurs alternatif/continu 1, 2 fournissent, côté continu DC, la tension d'alimentation continue $U_{1DC}$ sur une borne d'alimentation 7 de la chaîne de traction C.

Le dispositif d'alimentation de ladite chaîne de traction C est alimenté au moyen d'un premier élément d'alimentation 8A et d'un second élément d'alimentation 8B connectés, d'une part, à ladite ligne d'alimentation 9.

Le procédé d'alimentation de la chaîne de traction C comporte une étape consistant à connecter le premier élément d'alimentation 8A, d'autre part, à l'enroulement primaire 6 du transformateur d'alimentation 5, au moyen d'un premier élément de connexion 11A, lorsque ladite tension d'alimentation disponible sur ladite ligne d'alimentation 9 est une tension alternative $U_{AC}$, ou à connecter le second élément d'alimentation 8B, au moyen d'un second élément de connexion 11B, d'autre part, soit à la borne d'alimentation 7 de la chaîne de traction C, lorsque la tension d'alimentation disponible sur ladite ligne d'alimentation 9 est une tension continue $U_{1DC}$ égale à la tension d'alimentation de la chaîne de traction C, soit au point milieu 10 des convertisseurs séries 1, 2, lorsque la tension d'alimentation disponible sur la ligne d'alimentation 9 est une tension continue $U_{2DC}$ de l'ordre de la moitié de la tension d'alimentation de la chaîne de traction C.

## Revendications

**1.** Dispositif d'alimentation sous tension continue $U_{1DC}$ d'une chaîne de traction C au moyen de convertisseurs (1, 2) à partir de différentes tensions alternatives ou continues $U_{AC}$, $U_{DC}$ disponibles sur une ligne d'alimentation (9), lesdits convertisseurs alternatif/continu (1, 2) étant connectés côté alternatif AC, respectivement, à un premier (3) et à un second (4) enroulements secondaires d'un transformateur d'alimentation (5) comportant un enroulement primaire (6), lesdits convertisseurs alternatif/continu (1, 2) fournissant, côté continu DC, ladite tension d'alimentation continue $U_{1DC}$ sur une borne d'alimentation (7) de ladite chaîne de traction C, ledit dispositif d'alimentation de ladite chaîne de traction C étant alimenté au moyen d'un premier élément d'alimentation (8A) et d'un second élément d'alimentation (8B) connectés, d'une part, à ladite ligne d'alimentation (9), ledit premier élément d'alimentation (8A) étant susceptible d'être connecté, d'autre part, audit enroulement primaire (6) dudit transformateur d'alimentation (5), au moyen d'un premier élément de connexion (11A), et ledit second élément d'alimentation (8B) étant susceptible d'être connecté, d'autre part, à ladite borne d'alimentation (7) de ladite chaîne de traction C, ledit dispositif d'alimentation de ladite chaîne de traction C étant **caractérisé en ce que** lesdits convertisseurs alternatif/continu (1, 2) sont disposés en série de manière à présenter un point milieu (10) et **en ce que** ledit second élément d'alimentation (8B) est également susceptible d'être connecté, d'autre part, audit point milieu (10) desdits convertisseurs séries (1, 2), au moyen d'un second élément de connexion (11B).

**2.** Dispositif selon la revendication 1, dans lequel l'alimentation sous tension continue $U_{1DC}$ de ladite chaîne de traction C est effectuée à partir d'une tension continue $U_{2DC}$ de l'ordre de la moitié de la tension d'alimentation de ladite chaîne de traction C.

**3.** Dispositif selon la revendication 1, dans lequel l'alimentation sous tension continue $U_{1DC}$ de ladite chaîne de traction C est effectuée à partir de toute tension alternative $U_{AC}$.

**4.** Dispositif selon la revendication 1, dans lequel l'alimentation sous tension continue $U_{1DC}$ de ladite chaîne de traction C est effectuée à partir d'une tension continue $U_{1DC}$ égale à la tension d'alimentation de ladite chaîne de traction C.

**5.** Dispositif selon l'une quelconque des revendications 3 ou 4, dans lequel ladite chaîne de traction C est alimentée par l'intermédiaire d'un dispositif de filtrage (12).

**6.** Dispositif selon les revendications 3 et 5, dans lequel ledit dispositif de filtrage (12) comportant des condensateurs, tout ou partie de ces condensateurs sont constitués des condensateurs associés auxdits convertisseurs (1, 2).

**7.** Dispositif selon l'une quelconque des revendications 1 à 6, dans lequel ledit transformateur d'alimentation (5) comporte un enroulement supplémentaire (13).

**8.** Dispositif selon l'une quelconque des revendications précédentes, dans lequel lesdits convertisseurs (1, 2) sont du type pont monophasé à commutations forcées PMCF.

**9.** Procédé d'alimentation sous tension continue $U_{1DC}$ d'une chaîne de traction C au moyen de convertisseurs (1, 2) à partir de différentes tensions alternatives ou continues $U_{AC}$, $U_{DC}$ disponibles sur une ligne d'alimentation (9), lesdits convertisseurs alternatif/continu (1, 2) étant connectés côté alternatif AC, respectivement, à un premier (3) et à un second (4) enroulements secondaires d'un transformateur d'alimentation (5) comportant un enroulement primaire (6), lesdits convertisseurs alternatif/continu (1, 2) fournissant, côté continu DC, ladite tension d'alimentation continue $U_{1DC}$ sur une borne d'alimentation (7) de ladite chaîne de traction C, ledit dispositif d'alimentation de ladite chaîne de traction C étant alimenté au moyen d'un premier élément d'alimentation (8A) et d'un second élément d'alimentation (8B) connectés, d'une part, à ladite ligne d'alimentation (9), ledit procédé comportant une étape consistant à connecter ledit premier élément d'alimentation (8A), d'autre part, audit enroulement primaire (6) dudit transformateur d'alimentation (5), au moyen d'un premier élément de connexion (11A), lorsque ladite tension d'alimentation disponible sur ladite ligne d'alimentation (9) est une tension alternative $U_{AC}$, ou à connecter ledit second élément d'alimentation (8B), au moyen d'un second élément de connexion (11B), d'autre part, à ladite borne d'alimentation (7) de ladite chaîne de traction C, lorsque ladite tension d'alimentation disponible sur ladite ligne d'alimentation (9) est une tension continue $U_{1DC}$ égale à la tension d'alimentation de ladite chaîne de traction C, ledit procédé d'alimentation de ladite chaîne de traction C étant **caractérisé en ce que** lesdits convertisseurs alternatif/continu (1, 2) sont disposés en série de manière à présenter un point milieu (10) et **en ce qu'**il comporte une étape consistant à connecter ledit second élément d'alimentation (8B), au moyen dudit second élément de connexion (11B), audit point milieu (10) desdits convertisseurs séries (1, 2), lorsque ladite tension d'alimentation disponible sur ladite ligne d'alimentation (9) est une tension continue $U_{2DC}$ de l'ordre de la moitié de la tension d'alimentation de ladite chaîne de traction C.

**Patentansprüche**

**1.** Vorrichtung zur Gleichspannungsversorgung U1DC einer Zugkette C mittels Wandlern (1, 2) ausgehend von verschiedenen Wechselspannungen oder Gleichspannungen UAC, UDC, die an einer Speiseleitung (9) dargeboten werden, wobei die Wechselspannungs/Gleichspannungs-Wandler (1, 2) wechselstromseitig AC jeweils an einer ersten (3) und an einer zweiten (4) Sekundärwicklung eines Speisetransformators (5) angeschlossen sind, der eine Primärwicklung (6) aufweist, wobei die Wechselspannungs/Gleichspannungs-Wandler (1, 2) gleichstromseitig DC die Versorgungsgleichspannung U1DC an einem Speiseanschluss (7) der Zugkette C liefern, wobei die Versorgungsvorrichtung der Zugkette C mittels eines ersten Speiseelements (8A) und eines zweiten Speiseelements (8B) gespeist wird, die einerseits an die Speiseleitung (9) angeschlossen sind, wobei das erste Speiseelement (8A) geeignet ist, andererseits an die Primärwicklung (6) des Speisetransformators (5) mittels eines ersten Anschlusselements (11A) angeschlossen zu werden, und das zweite Speiseelement (8B) geeignet ist, andererseits an den Speiseanschluss (7) der Zugkette C angeschlossen zu werden, wobei die Versorgungsvorrichtung der Zugkette C **dadurch gekennzeichnet ist, dass** die Wechselspannungs-/Gleichspannungs-Wandler (1, 2) in Serie derart geschaltet sind, dass sie einen Mittelpunkt (10) aufweisen und dass das zweite Speiseelement (8B) ebenfalls geeignet ist, andererseits an den Mittelpunkt (10) der Serienwandler (1, 2) mittels eines zweiten Anschlusselements (11B) angeschlossen zu werden.

**2.** Vorrichtung nach Anspruch 1,
in der die Gleichspannungsversorgung U1 DC der Zugkette C ausgehend von einer Gleichspannung U2DC einer Größenordnung der Hälfte der Speisespannung der Zugkette C erfolgt.

**3.** Vorrichtung nach Anspruch 1,
in der die Gleichspannungsversorgung U1DC der Zugkette C ausgehend von einer jeglichen Wechselspannung UAC erfolgt.

**4.** Vorrichtung nach Anspruch 1,
in der die Gleichspannungsversorgung U1DC der Zugkette C ausgehend von einer Gleichspannung U1DC erfolgt, die gleich der Speisespannung der Zugkette C ist.

**5.** Vorrichtung nach Anspruch 3 oder 4,
in der die Zugkette C mittels einer Filtervorrichtung (12) gespeist wird.

**6.** Vorrichtung nach Anspruch 3 und Anspruch 5,
in der die Filtervorrichtung (12) Kondensatoren aufweist, wobei diese Kondensatoren ganz oder teilweise aus Kondensatoren gebildet sind, die den Wandlern (1, 2) zugeordnet sind.

7. Vorrichtung nach einem der Ansprüche 1 bis 6, in der der Speisetransformator (5) eine zusätzliche Wicklung (13) aufweist.

8. Vorrichtung nach einem der vorstehenden Ansprüche, in der die Wandler (1, 2) vom einphasigen Brücken-Typ mit Zwangskommutierungen PMCF sind.

9. Verfahren zur Gleichspannungsversorgung U1DC einer Zugkette C mittels Wandlern (1, 2) ausgehend von verschiedenen Wechselspannungen oder Gleichspannungen UAC, UDC, die an einer Speiseleitung (9) dargeboten werden, wobei die Wechselspannungs/Gleichspannungs-Wandler (1, 2) wechselstromseitig AC jeweils an einer ersten (3) und an einer zweiten (4) Sekundärwicklung eines Speisetransformators (5) angeschlossen sind, der eine Primärwicklung (6) aufweist, wobei die Wechselspannungs/Gleichspannungs-Wandler (1, 2) gleichstromseitig DC die Versorgungsgleichspannung U1DC an einem Speiseanschluss (7) der Zugkette C liefern, wobei die Versorgungsvorrichtung der Zugkette C mittels eines ersten Speiseelements (8A) und eines zweiten Speiseelements (8B) gespeist wird, die einerseits an die Speiseleitung (9) angeschlossen sind, wobei das Verfahren einen Schritt aufweist, der darin besteht, das erste Speiseelement (8A) andererseits an die Primärwicklung (6) des Speisetransformators (5) mittels eines ersten Anschlusselements (11A) anzuschließen, wenn die an der Speiseleitung (9) dargebotene Versorgungsspannung eine Wechselspannung UAC ist, oder das zweite Speiseelement (8B) mittels eines zweiten Anschlusselements (11B) andererseits an den Speiseanschluss (7) der Zugkette C anzuschließen, wenn die an der Speiseleitung (9) dargebotene Versorgungsspannung eine Gleichspannung U1DC ist, die gleich der Versorgungsspannung der Zugkette C ist, wobei das Verfahren zur Versorgung der Zugkette C **dadurch gekennzeichnet ist, dass** die Wechselspannungs-/Gleichspannungs-Wandler (1, 2) in Serie derart geschaltet sind, dass sie einen Mittelpunkt (10) aufweisen, und dass es einen Schritt aufweist, der darin besteht, das zweite Speiseelement (8B) mittels des zweiten Anschlusselements (11B) an den Mittelpunkt (10) der Serienwandler (1, 2) anzuschließen, wenn die an der Speiseleitung (9) dargebotene Versorgungsspannung eine Gleichspannung U2DC einer Größenordnung der Hälfte der Versorgungsspannung der Zugkette C ist.

## Claims

1. Device for direct current voltage $U_{1DC}$ power supply to a traction system C by means of converters (1, 2) from different alternating current or direct current voltages ($U_{AC}$, $U_{DC}$) available on a power supply line (9), the alternating current AC sides of said alternating current/direct current converters (1, 2) being respectively connected to a first secondary winding (3) and to a second secondary winding (4) of a power supply transformer (5) having a primary winding (6), the direct current DC sides of said alternating current/direct current converters (1, 2) supplying said direct current power supply voltage ($U_{1DC}$) at a power supply terminal (7) of said traction system C, said power supply device of said traction system C being supplied with power by means of a first power supply element (8A) and a second power supply element (8B) connected, on the one hand, to said power supply line (9), said first power supply element (8A) being adapted to be connected, on the other hand, to said primary winding (6) of said power supply transformer (5) by means of a first connection element (11A) and said second power supply element (8B) being adapted to be connected, on the other hand, to said power supply terminal (7) of said traction system C, said device for supplying power to said traction system C being **characterized in that** said alternating current/direct current converters (1, 2) are disposed in series so as to have a mid-point (10) and **in that** said second power supply element (8B) is also adapted to be connected, on the other hand, to said mid-point (10) of said series converters (1, 2) by means of a second connection element (11B).

2. Device according to claim 1 wherein power is supplied at a direct current voltage $U_{1DC}$ to said traction system C from a direct current voltage $U_{2DC}$ in the order of half the power supply voltage of said traction system C.

3. Device according to claim 1 wherein power is supplied at a direct current voltage $U_{1DC}$ to said traction system C from any alternating current voltage $U_{AC}$.

4. Device according to claim 1 wherein power is supplied at a direct current voltage $U_{1DC}$ to said traction system C from a direct current voltage $U_{1DC}$ equal to the power supply voltage of said traction system C.

5. Device according to either claim 3 or claim 4 wherein said traction system C is supplied with power via a filter device (12).

6. Device according to claims 3 and 5 wherein said filter device (12) includes capacitors, all or some of said capacitors being capacitors associated with said converters (1, 2).

7. Device according to any of claims 1 to 6 wherein said power supply transformer (5) has an additional winding (13).

8. Device according to any one of the preceding claims wherein said converters (1, 2) are of the singlephase bridge type with forced switching.

9. Method for direct current voltage $U_{1DC}$ power supply to a traction system C by means of converters (1, 2) from different alternating current or direct current voltages $U_{AC}$, $U_{DC}$ available on a power supply line (9), the alternating current AC sides of said alternating current/direct current converters (1, 2) being respectively connected to a first secondary winding (3) and to a second secondary winding (4) of a power supply transformer (5) having a primary winding (6), the direct current DC sides of said alternating current/direct current converters (1, 2) supplying said direct current power supply voltage $U_{1DC}$ at a power supply terminal (7) of said traction system C, said power supply device of said traction system C being supplied with power by means of a first power supply element (8A) and a second power supply element (8B) connected, on the one hand, to said power supply line (9), said method including a step of connecting said first power supply element (8A), on the other hand, to said primary winding (6) of said power supply transformer (5) by means of a first connection element (11A) if said power supply voltage available on said power supply line (9) is an alternating current voltage $U_{AC}$ or connecting said second power supply element (8B) by means of a second connection element (11B), on the other hand, to said power supply terminal (7) of said traction system C if said power supply voltage available on said power supply line (9) is a direct current voltage $U_{1DC}$ equal to the power supply voltage of said traction system C, said method for supplying power to said traction system C being **characterized in that** said alternating current/direct current converters (1, 2) are disposed in series so as to have a mid-point (10) and **in that** it includes a step of connecting said second power supply element (8B) to said mid-point of said series converters by means of said second connection element (11B) if said power supply voltage available on said power supply line (9) is a direct current voltage $U_{2DC}$ in the order of half the power supply voltage of said traction system C.

# FIG.1

# FIG.2

# FIG. 3

# FIG. 4

# FIG.5

# FIG.6

EP 0 826 550 B1

# FIG.7